# EUROPEAN PATENT APPLICATION

(11) **EP 4 507 068 A1**
(43) Date of publication of application: **12.02.2025**
(21) Application number: 23794879.9
(22) Date of filing: 22.03.2023
(51) Int. Cl.: H01M 10/615, H01M 10/625, H01M 10/633, B60L 58/27

(54) **ELECTRIC DEVICE AND HEATING CONTROL METHOD AND DEVICE THEREFOR, AND MEDIUM**

(30) Priority: 24.04.2022 CN 202210435623
(71) Applicant: Contemporary Amperex Technology Co., Limited, Ningde, Fujian 352100 (CN)
(72) Inventor: HUANG, Xiaojian, Ningde, Fujian 352100 (CN); YAN, Yu, Ningde, Fujian 352100 (CN); LI, Zhanliang, Ningde, Fujian 352100 (CN); DAN, Zhimin, Ningde, Fujian 352100 (CN); CHEN, Wei, Ningde, Fujian 352100 (CN); ZHAO, Yuanmiao, Ningde, Fujian 352100 (CN)
(74) Representative: Ziebig Hengelhaupt Intellectual Property Attorneys Patentanwaltskanzlei PartGmbB
(86) International application number: PCT/CN2023/083100
(87) International publication number: WO 2023/207444

(57) **Abstract**

The present application discloses an electrical apparatus, and a method, apparatus and medium for controlling heating thereof. By applying the technical solutions of embodiments of the present application, before detecting a mobile electrical apparatus is driving, a driving heating mode selected by a user can be firstly received, and the driving heating mode corresponds to that enablement of a heating function is allowed or enablement of a heating function is to be allowed. Thus, the battery heating function is comprehensively controlled to be enabled or disabled according to the operating parameters of the battery and the motor based on the current driving heating mode. Further, a heating mode that best matches the electrical apparatus may be selected based on the user's usage habit and the current driving environment of the electrical apparatus for heating the battery. Further, the conditions of ineffective heating increased by a user manually controlling a battery self-healing function and the resulting high energy consumption in related technologies are avoided.

## Description

### CROSS-REFERENCE TO RELATED APPLICATIONS

The present application claims priority to Chinese patent application 202210435623.6 entitled "ELECTRICAL APPARATUS, AND METHOD, APPARATUS AND MEDIUM FOR CONTROLLING HEATING THEREOF" and filed on April 24, 2022, the entire contents of which are incorporated herein by reference.

### TECHNICAL FIELD

The present application relates to battery management technologies, and in particular relates to an electrical apparatus, and a method, apparatus and medium for controlling heating thereof.

### BACKGROUND

With the development of science and technology, more and more electrical apparatuses implement their operational functions by carrying batteries.

In a case that an electrical apparatus is an electric vehicle, in related technologies, to improve the adaptability in cold regions, the electric vehicle is gradually adapted with a battery heating function. Battery heating is a new function of electric vehicles. In use of the function, the actual conditions of a battery, a motor and the entire vehicle need to be considered, and heating is enabled in certain scenarios to protect the battery, the motor and other components, and prevent the electric vehicles from faults. Thus, the expectation of a driver is met in using the electric vehicles.

However, in related technologies, a battery self-heating function is mostly controlled to be enabled or disabled manually by a user, which likely leads to conditions of ineffective heating increased due to unreasonable user control, and further causes high energy consumption.

### SUMMARY OF THE INVENTION

Embodiments of the present application provide an electrical apparatus, and a method, apparatus and medium for controlling heating thereof, to avoid conditions of ineffective heating increased by a user manually controlling a battery self-healing function, and the resulting high energy consumption in related technologies.

Embodiments of the present application provide an electrical apparatus, and a method, apparatus and medium for controlling heating thereof, to avoid conditions of ineffective heating increased by a user manually controlling a battery self-healing function, and the resulting high energy consumption in related technologies.

According to a first aspect of the embodiments of the present application, a method for controlling heating of a battery is provided, including: determining a driving heating mode; acquiring first operating parameters of the battery and second operating parameters of a motor in a charging and discharging circuit of the battery during a driving process of a mobile electrical apparatus; determining that the mobile electrical apparatus meets a battery heating condition based on the first operating parameters and the second operating parameters; and enabling the corresponding battery heating function based on the driving heating mode.

By applying the technical solutions of the embodiments of the present application, before detecting a mobile electrical apparatus is driving, a driving heating mode selected by a user can be firstly received, and the driving heating mode corresponds to that enablement of a heating function is allowed or enablement of a heating function is to be allowed. Thus, the battery heating function is comprehensively controlled to be enabled or disabled according to the operating parameters of the battery and the motor based on the current driving heating mode. Further, a heating mode that best matches the electrical apparatus may be selected based on the user's usage habit and the current driving environment of the electrical apparatus for heating the battery. Further, the conditions of ineffective heating increased by a user manually controlling a battery self-healing function, and the resulting high energy consumption in related technologies are avoided.

Optionally, in another embodiment based on the aforementioned method in the present application, the driving heating mode includes an automatic heating mode, a semi-automatic heating mode and a manual heating mode. By applying the technical solutions of the embodiments of the present application, the manual heating mode and the automatic heating mode that allow the electrical apparatus to directly enable the battery heating function can be provided for the user, or the semi-automatic heating mode that allows the electrical apparatus to directly enable the battery heating function only when the user allows can be provided for the user.

Optionally, in another embodiment based on the aforementioned method in the present application, when the driving heating mode is the semi-automatic heating mode, before enabling the battery heating function based on the driving heating mode, the following steps are included: sending a request instruction for requesting to enable the battery heating function; and enabling the battery heating function if a reply instruction allowing the heating function to be enabled is received. By applying the technical solutions of the embodiments of the present application, the manual heating mode and the automatic heating mode that allow the electrical apparatus to directly enable the battery heating function can be provided for the user, or the semi-automatic heating mode that allows the electrical apparatus to directly enable the battery heating function only when the user allows can be provided for the user. Thus, the battery heating function is prevented from being directly enabled in a scenario where the user does not agree to enable the battery heating function, and the user's experience in using the electrical apparatus is not affected.

Optionally, in another embodiment based on the aforementioned method in the present application, when the driving heating mode is the manual heating mode, before a driving process of the mobile electrical apparatus is started, the following step is included: receiving a request to allow the mobile electrical apparatus to enable the heating function during the current driving process; or, when the driving heating mode is the automatic heating mode, before a driving process of the mobile electrical apparatus is started, the following step is included: receiving a request to allow the mobile electrical apparatus to enable the heating function during a driving process within a preset time limit. By applying the technical solutions of the embodiments of the present application, the manual heating mode and the automatic heating mode that allow the electrical apparatus to directly enable the battery heating function can be provided for the user, or the semi-automatic heating mode that allows the electrical apparatus to directly enable the battery heating function only when the user allows can be provided for the user. Thus, the battery heating function is prevented from being directly enabled in a scenario where the user does not agree to enable the battery heating function, and the user's experience in using the electrical apparatus is not affected.

Optionally, in another embodiment based on the aforementioned method in the present application, when the driving heating mode is the manual heating mode, before a driving process of the mobile electrical apparatus is started, the following step is included: receiving a request to allow enablement of the heating function. By applying the technical solutions of the embodiments of the present application, the electrical apparatus can enable the battery heating function only when the user allows, when detecting that the user selects the semi-automatic heating mode. An enabling request is sent to the user when determining that the operating parameters of the battery and the motor meet a heating condition currently. Thus, the battery heating function is prevented from being directly enabled in a scenario where the user does not agree to enable the battery heating function, and the user's experience in using the electrical apparatus is not affected.

Optionally, in another embodiment based on the aforementioned method in the present application, the acquiring first operating parameters of the battery and second operating parameters of a motor of the electrical apparatus includes: acquiring first operating parameters of the battery, the first operating parameters including the corresponding cell temperature value, battery current value, battery voltage value, and remaining capacity value of the battery; and acquiring second operating parameters of the motor, the second operating parameters including the corresponding motor temperature value, motor current value and motor voltage value of the motor. By applying the technical solutions of the embodiments of the present application, the corresponding battery heating function can be enabled only when it is ensured that the battery is not in an overheated state and the remaining capacity is sufficient, and it is ensured by detecting the current and voltage values of the motor that the motor is fault-free. Thus, the potential safety hazard caused by rashly enabling the heating function before the battery and the motor reach a preset static state is avoided.

Optionally, in another embodiment based on the aforementioned method in the present application, the determining that the mobile electrical apparatus meets a battery heating condition based on the first operating parameters and the second operating parameters includes: determining that the operating indices of the battery meet a heating function enabling condition and that the battery is in a fault-free state based on the first operating parameters; determining that the motor is in a fault-free state based on the second operating parameters; and determining that the mobile electrical apparatus meets the battery heating condition. By applying the technical solutions of the embodiments of the present application, the corresponding battery heating function can be enabled only when it is ensured that the battery is not in an overheated state and the remaining capacity is sufficient, and it is ensured by detecting the current and voltage values of the battery that the battery is fault-free. Thus, the potential safety hazard caused by rashly enabling the heating function before the battery reaches a preset static state is avoided.

Optionally, in another embodiment based on the aforementioned method in the present application, the determining that the operating indices of the battery meet a heating function enabling condition and that the battery is in a fault-free state based on the first operating parameters includes: determining that the cell temperature value of the battery is lower than a first preset temperature value, and the remaining capacity value of the battery is greater than a first preset capacity threshold based on the cell temperature value and the remaining capacity value included in the first operating parameters; determining that the operating indices of the battery meet the heating function enabling condition; determining that the battery current value is within a first preset current threshold range, and the battery voltage value is within a first preset voltage threshold range based on the battery current value and the battery voltage value included in the first operating parameters; and determining that the battery is in a fault-free state. By applying the technical solutions of the embodiments of the present application, the corresponding battery heating function can be enabled only when it is ensured that the battery is not in an overheated state and the remaining capacity is sufficient, and it is ensured by detecting the current and voltage values of the battery that the battery is fault-free. Thus, the potential safety hazard caused by rashly enabling the heating function before the battery reaches a preset static state is avoided.

Optionally, in another embodiment based on the aforementioned method in the present application, the determining that the motor is in a fault-free state based on the second operating parameters includes: determining that the motor current value is within a second preset current threshold range, and the motor voltage value is within a second preset voltage threshold range based on the motor current value and the motor voltage value included in the second operating parameters; determining that the motor temperature value is within a preset temperature range; and determining that the motor is in a fault-free state. By applying the technical solutions of the embodiments of the present application, whether the motor is in a fault-free state may be determined by detecting whether the current and voltage values of the motor are within the normal threshold ranges. The corresponding battery heating function is enabled only when confirming that the motor is fault-free. Thus, the potential safety hazard caused by rashly enabling the heating function before the motor reaches a preset static state is avoided.

Optionally, in another embodiment based on the aforementioned method in the present application, after enabling the battery heating function, the following steps are further included: determining whether the battery meets a heating function disabling condition based on the first operating parameters and the second operating parameters; and if the condition is met, disabling the battery heating function. By applying the technical solutions of the embodiments of the present application, after enabling the corresponding battery heating function, the battery heating function may be automatically disabled after detecting that a preset condition is met based on the operating parameters of the battery and the voltage. Thus, the battery life is prevented from being affected by overheating of the battery.

Optionally, in another embodiment based on the aforementioned method in the present application, the determining whether the battery meets a heating function disabling condition based on the first operating parameters and the second operating parameters includes: determining that the battery meets the heating function disabling condition if it is detected that the cell temperature value of the battery is greater than or equal to a second preset temperature value. By applying the technical solutions of the embodiments of the present application, after enabling the corresponding battery heating function, the battery heating function may be automatically disabled when detecting that the cell temperature value of the battery is over-high. Thus, the battery life is prevented from being affected by overheating of the battery.

Optionally, in another embodiment based on the aforementioned method in the present application, after the disabling the battery heating function, the following steps are further included: generating a control instruction for continuously acquiring the first operating parameters and the second operating parameters; and enabling the battery heating function based on the driving heating mode after determining that the mobile electrical apparatus meets a battery heating condition and based on the first operating parameters and the second operating parameters. By applying the technical solutions of the embodiments of the present application, after the battery heating function is automatically disabled when detecting that the cell temperature value of the battery is over-high, the operating parameters of the battery and the motor can be acquired again, and the corresponding battery heating function can be enabled again when detecting that the operating parameters of the battery and the motor meet the battery heating condition. Thus, it is ensured that the battery can be heated again after cooling to a certain temperature. Further, the conditions of ineffective heating increased by a user manually controlling a battery self-healing function, and the resulting high energy consumption in related technologies are avoided.

Optionally, in another embodiment based on the aforementioned method in the present application, the determining whether the battery meets a heating function disabling condition based on the first operating parameters and the second operating parameters includes: if it is detected that the remaining capacity value of the battery is less than or equal to a second preset capacity threshold, and/or the mobile electrical apparatus corresponds to a fault state, determining that the battery meets an abnormal disabling condition for the heating function. By applying the technical solutions of the embodiments of the present application, after detecting that the battery heating function is disabled due to a low remaining capacity value of the battery or a fault of the mobile electrical apparatus, it can be determined that the battery meets the abnormal disabling condition for the heating function. Then, an instruction to stop acquiring the operating parameters of the battery and the motor is generated. Thus, the computing resource of the electrical apparatus is prevented from being further consumed due to continuous acquisition of the operating parameters.

Optionally, in another embodiment based on the aforementioned method in the present application, after the determining that the battery meets the abnormal disabling condition for the heating function, the following step is further included: generating a control instruction to stop acquiring the first operating parameters and the second operating parameters. By applying the technical solutions of the embodiments of the present application, after detecting that the battery heating function is disabled due to a low remaining capacity value of the battery or a fault of the mobile electrical apparatus, it can be determined that the battery meets the abnormal disabling condition for the heating function. Then, an instruction to stop acquiring the operating parameters of the battery and the motor is generated. Thus, the computing resource of the electrical apparatus is prevented from being further consumed due to continuous acquisition of the operating parameters.

According to a second aspect of the embodiments of the present application, an apparatus for controlling heating of a battery is provided, including: a receiving module, configured to determine a driving heating mode; an acquisition module, configured to acquire first operating parameters of the battery and second operating parameters of a motor in a charging and discharging circuit of the battery during a driving process of a mobile electrical apparatus; a determining module, configured to determine that the mobile electrical apparatus meets a battery heating condition based on the first operating parameters and the second operating parameters; and an enabling module, configured to enable the corresponding battery heating function based on the driving heating mode.

According to a third aspect of the embodiments of the present application, a mobile electrical apparatus is provided, including:
a memory, configured to store executable instructions; and
a display, configured to execute the executable instructions stored in the memory to implement the operations of any one of the aforementioned methods for controlling heating of a battery.

According to a fourth aspect of the embodiments of the present application, a computer-readable storage medium is provided, having computer-readable instructions stored therein, and the instructions, when executed, implement the operations of any one of the aforementioned methods for controlling heating of a battery.

The above summary is only an overview of the technical solutions of the present application. To have a clearer understanding of the technical means of the present application, implement according to the content of the specification, and make the above and other objectives, features and advantages of the present application clearer and easier to understand, a detailed description of the present application is listed below.

### DESCRIPTION OF DRAWINGS

By reading the detailed description of the preferred embodiments below, various other advantages and benefits may become apparent to those of ordinary skill in the art. The accompanying drawings are only intended to illustrate the preferred embodiments and are not considered a limitation to the present application. Moreover, in all of the drawings, the same components are indicated by the same reference numerals. In the figures:
FIG. 1 is a schematic structural diagram of a power supply apparatus applied to a battery provided by the present application.
FIG. 2 is a flowchart of a method for controlling heating of a battery provided by the present application.
FIG. 3 is an overall flowchart of a method for controlling heating of a battery provided by the present application.
FIG. 4 is a flowchart in an automatic heating mode of a method for controlling heating of a battery provided by the present application.
FIG. 5 is a flowchart in a semi-automatic heating mode of a method for controlling heating of a battery provided by the present application.
FIG. 6 is a flowchart in a manual heating mode of a method for controlling heating of a battery provided by the present application.
FIG. 7 is an overall flowchart of another method for controlling heating of a battery provided by the present application.
FIG. 8 is a schematic structural diagram of an electronic apparatus for controlling heating of a battery provided by the present application.
FIG. 9 is a schematic diagram of an electronic device of a battery provided by the present application.

### DETAILED DESCRIPTION

Various exemplary embodiments of the present application are described in detail with reference to the accompanying drawings. It should be noted that, unless otherwise specified, the relative arrangement, numerical expressions and numerical values of the components and steps described in the embodiments do not limit the scope of the present application.

Also, it should be understood that for ease of description, the dimensions of the respective parts shown in the accompanying drawings are not drawn according to the actual proportional relationship.

The following description of at least one exemplary embodiment is merely illustrative in nature and is in no way intended to limit the present application, and application or use thereof.

The technology, methods and devices known to those of ordinary skill in related art may not be discussed in detail, but in appropriate cases, such technology, methods and devices should be considered as part of the specification.

It should be noted that similar labels and letters represent similar items in the following accompanying drawings, so once an item is defined in an accompanying drawing, further discussion is dispensable in the subsequent accompanying drawings.

In addition, the technical solutions of the respective embodiments of the present application may be combined with each other, on the basis that the combinations can be implemented by those of ordinary skill in the art. When the combinations of the technical solutions are contradictory or cannot be implemented, it should be considered that such combinations of the technical solutions do not exist and are not within the scope of protection claimed by the present application.

It should be noted that all directional indications (e.g., up, down, left, right, front and back) in the embodiments of the present application are only used for describing the relative positional relationships, motion situations or the like between components in specific postures (as shown in the accompany drawings). If the specific postures change, the directional indications also change accordingly.

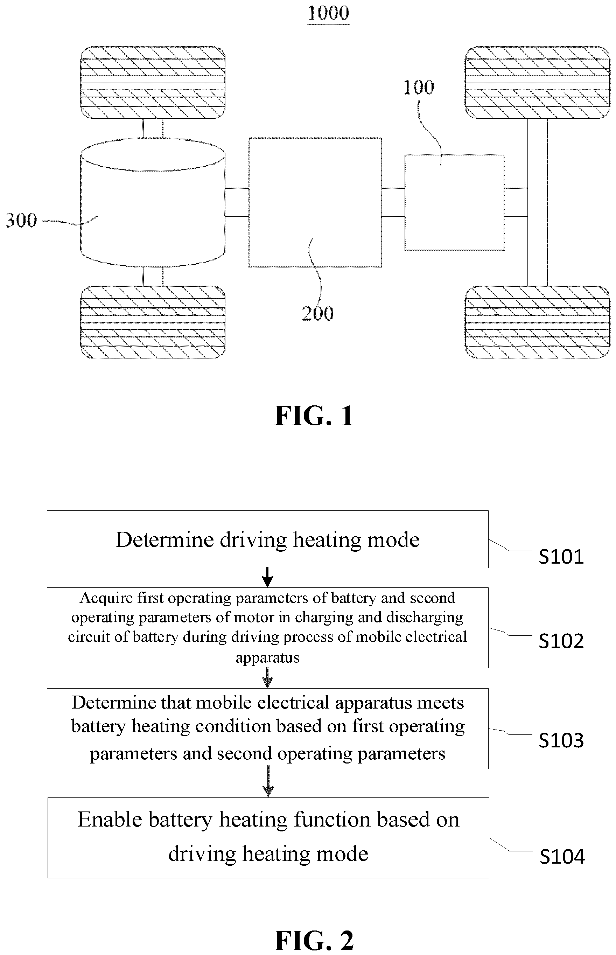

A method for controlling heating of a battery according to an exemplary embodiment of the present application is described below in conjunction with FIG. 1 to FIG. 7. It should be noted that the following application scenarios are only shown for the purpose of facilitating understanding of the spirit and principle of the present application, and the embodiments of the present application are not limited in this regard. In contrast, the embodiments of the present application may be applied to any applicable scenario.

With the development of science and technology, more and more electrical apparatuses implement their operational functions by carrying batteries.

In a case that the electrical apparatus is a vehicle, in related technologies, vehicles are one of important means of transportation for human beings. With the progress of the times, the per capita ownership of vehicles in China continues to increase and has entered thousands of households. Electric vehicles powered by batteries are becoming increasingly popular due to their environmentally friendly characteristics.

Further, power batteries are the core components of electric vehicles, but power batteries are sensitive to temperature, and low temperatures may affect a battery's discharge performance. To make a power battery discharge smoothly and extend the service life thereof, the power battery needs to be heated in the driving process of electric vehicles at low temperatures.

The applicant of the present application notices a problem in the prior art that, in related technologies, a battery self-heating function is mostly controlled to be enabled or disabled manually by a user, which likely leads to conditions of ineffective heating increased due to unreasonable user control, and further causes high energy consumption.

The mobile electrical apparatus disclosed in the embodiments of the present application may include but is not limited to vehicles, ships, aircraft, or the like. The battery or battery pack disclosed in the present application can be used to form a power supply system of the electrical apparatus, which is beneficial for alleviating and automatically adjusting a method for controlling heating of a battery, and further improves the stability of battery performance and battery life.

The embodiments of the present application provide an electrical apparatus using a battery as a power source, and the electrical apparatus may be, but is not limited to, mobile phones, tablets, laptops, electric toys, electric tools, electric bicycles, electric vehicles, ships, spacecraft, and the like. The electric toys may include fixed or mobile electric toys, such as game consoles, electric car toys, electric ship toys and electric aircraft toys. The spacecraft may include aircraft, rockets, space shuttles, spaceships, and the like.

In an embodiment, the battery in the present application may be a rechargeable battery, such as lithium-ion batteries, nickel-hydrogen batteries, nickel-chromium batteries, and nickel-zinc batteries.

To facilitate explanation, in the following embodiment, a mobile electrical apparatus of an embodiment of the present application being a vehicle 1000 is taken as an example for explanation.

Please refer to FIG. 1, which is a schematic structural diagram of a vehicle 1000 provided in some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as the operating power source for the vehicle 1000, but also as a driving power source for the vehicle 1000, to replace or partially replace fuel or natural gas to provide driving power for the vehicle 1000.

In an embodiment, the present application provides an electrical apparatus, and a method, apparatus and medium for controlling heating thereof.

FIG. 2 schematically illustrates a flowchart of a method for controlling heating of a battery according to an embodiment of the present application. As shown in FIG. 2, the method includes:
S101: Determine a driving heating mode.

Further, the driving heating mode may be manually selected by a user in the embodiment of the present application. In an embodiment, for example, a manual heating mode/automatic heating mode corresponding to that enablement of a heating function is allowed is determined. Or, a semi-automatic heating mode corresponding to that enablement of a heating function is to be allowed is determined.

Specifically, for the manual heating mode/automatic heating mode and the semi-automatic heating mode, the difference lies in that the manual heating mode/automatic heating mode may directly enable the corresponding battery heating function after determining that the mobile electrical apparatus meets a battery heating condition based on the first operating parameters and the second operating parameters. **In** the semi-automatic heating mode, after determining that the mobile electrical apparatus meets a battery heating condition based on the first operating parameters and the second operating parameters, first a request instruction for requesting to enable a battery heating function needs to be sent to the user using the mobile electrical apparatus, and only after receiving a reply instruction generated by the user to allow enablement of the heating function may the corresponding battery heating function be enabled. Based on different driving heating modes, the corresponding heating function enabling methods are used to achieve reasonable enablement of the heating function under different working conditions, thereby ensuring the stability of battery performance.

In an embodiment, a user may generate an instruction to select the driving heating mode in the mobile electrical apparatus, or generate an instruction to select the driving heating mode through a control system (e.g., APP).

S102: Acquire first operating parameters of the battery and second operating parameters of a motor in a charging and discharging circuit of the battery during a driving process of the mobile electrical apparatus.

Optionally, in an embodiment of the present application, first operating parameters of the battery may be acquired, and the first operating parameters include the corresponding cell temperature value, battery current value, battery voltage value, and remaining capacity value of the battery.

In addition, second operating parameters of the motor are also acquired, and the second operating parameters include the corresponding motor current value and motor voltage value.

Further, the present application may enable the corresponding battery heating function only when it is ensured that the battery is not in an overheated state and the remaining capacity is sufficient, and it is ensured by detecting the current and voltage values of the motor that the motor is fault-free. Thus, the potential safety hazard caused by rashly enabling the heating function before the battery and the motor reach a preset static state is avoided.

S103: Determine that the mobile electrical apparatus meets a battery heating condition based on the first operating parameters and the second operating parameters.

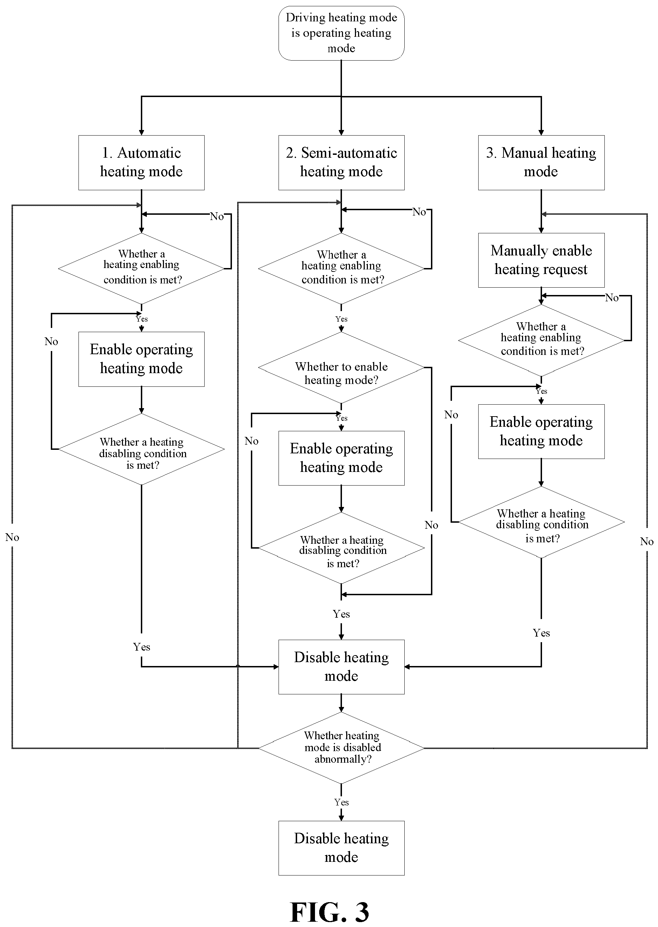

Taking the mobile electrical apparatus being an electric vehicle as an example, processes of determining that the mobile electrical apparatus meets a battery heating condition based on the first operating parameters of the battery and the second operating parameters of the motor in different driving heating modes are explained:
As shown in FIG. 3, the driving heating mode may include three situations, namely an automatic heating mode, a semi-automatic heating mode, and a manual heating mode in the embodiments of the present application.

### First situation:

In the automatic heating mode, before a user starts a vehicle, first the automatic heating mode of a battery heating function is selected. Further, a battery management system (BMS) and a vehicle control unit (VCU) may be configured to determine the enablement and actuation of an operating heating mode.

Further, the VCU may determine whether the battery (i.e., based on the first operating parameters of the battery) and the motor (i.e., based on the second operating parameters of the motor) meet the requirement for operating heating. If the requirement is met, the operating heating mode is enabled.

The BMS is configured to intelligently manage and maintain respective battery units, prevent overcharging and over-discharging of batteries, extend the battery life, and monitor the battery state.

In an embodiment, the BMS unit includes a BMS, a control module, a display module, a wireless communication module, an electrical device, a battery pack for supplying power to the electrical device, and an acquisition module for acquiring the information of the battery pack. The BMS is connected to the wireless communication module and the display module respectively through communication interfaces. An output end of the acquisition module is connected to an input end of the BMS. An output end of the BMS is connected to an input end of the control module. The control module is connected to the battery pack and the electrical device respectively. The BMS is connected to a server end through the wireless communication module.

In addition, the VCU mainly includes hardware and software. The hardware includes a case and hardware circuits, and the software includes application software and underlying software. The case is mainly used for protecting and sealing the hardware circuits, and should meet cleanliness requirements such as waterproof and dustproof, as well as mechanical requirements to avoid falling, vibration, and the like.

Further, the hardware circuits mainly include a main control chip (32-bit processing chip) and peripheral clock circuits, reset circuits, and power modules. The hardware circuits typically also include digital/analog signal processing circuits, frequency signal processing circuits, communication interface circuits, and the like. The application software and the underlying software are generally written in C language. The application software mainly controls upper-level control strategies, and is mainly responsible for real-time control of energy flow and distribution ratio based on the vehicle state and driver intentions. The underlying software is mainly responsible for initializing a microcontroller, real-time sending and receiving of controller area network (CAN) bus signals, and real-time processing and diagnosis of input and output signals.

It should be noted that in the automatic heating mode, when detecting that the battery reaches a heating disabling condition, in an embodiment, the operating heating mode may be automatically disabled, and the disabling condition is determined. In a case of abnormal disabling, the heating condition is no longer determined, otherwise, the heating condition is determined again.

### Second situation:

In the semi-automatic heating mode, before a user starts a vehicle, first the semi-automatic heating mode of a battery heating function is selected. Further, the VCU determines whether the battery (i.e., based on the first operating parameters of the battery) and the motor (i.e., based on the second operating parameters of the motor) meet the requirement for operating heating. If the requirement is met, an operating heating request instruction (request instruction for requesting to enable a battery heating function) is sent to a user terminal.

Further, the user terminal determines whether to enable the operating heating mode. When the user confirms enabling the operating heating mode, the entire vehicle enters the operating heating mode.

It should be noted that in the semi-automatic heating mode, when detecting that the battery reaches a heating disabling condition, in an embodiment, the operating heating mode may be automatically disabled, and the disabling condition is determined. Optionally, if the operating heating mode is disabled abnormally, the heating condition is no longer determined, otherwise, the heating condition is determined again.

### Third situation:

In the manual heating mode, before a user starts a vehicle, first the manual heating mode of a battery heating function is selected. In an embodiment, the corresponding battery heating function may be directly enabled in the manual heating mode. In another embodiment, the VCU determines whether the battery (i.e., based on the first operating parameters of the battery) and the motor (i.e., based on the second operating parameters of the motor) meet the requirement for operating heating. If the requirement is met, the corresponding battery heating function is enabled.

In addition, when the battery reaches a heating disabling condition, the operating heating mode is automatically disabled, and the disabling condition is determined. In a case of abnormal disabling, the heating condition is no longer determined, otherwise, the heating condition is determined again.

S104: Enable the corresponding battery heating function based on the driving heating mode.

According to an aspect of the embodiments of the present application, a method for controlling heating of a battery is provided, including: a driving heating mode is determined; first operating parameters of the battery and second operating parameters of a motor in a charging and discharging circuit of the battery are acquired during a driving process of a mobile electrical apparatus; it is determined that the mobile electrical apparatus meets a battery heating condition based on the first operating parameters and the second operating parameters; and the corresponding battery heating function is enabled based on the driving heating mode.

By applying the technical solutions of the embodiments of the present application, before detecting a mobile electrical apparatus is driving, a driving heating mode selected by a user can be firstly received, and the driving heating mode corresponds to that enablement of a heating function is allowed or enablement of a heating function is to be allowed. Thus, the battery heating function is comprehensively controlled to be enabled or disabled according to the operating parameters of the battery and the motor based on the current driving heating mode. Further, a heating mode that best matches the electrical apparatus may be selected based on the user's usage habit and the current driving environment of the electrical apparatus for heating the battery. Further, the conditions of ineffective heating increased by a user manually controlling a battery self-healing function, and the resulting high energy consumption in related technologies are avoided.

Optionally, in another embodiment based on the aforementioned method in the present application, the driving heating mode includes an automatic heating mode, a semi-automatic heating mode and a manual heating mode.

Specifically, for the manual heating mode/automatic heating mode and the semi-automatic heating mode, the difference lies in that the manual heating mode/automatic heating mode may directly enable the corresponding battery heating function after determining that the mobile electrical apparatus meets a battery heating condition based on the first operating parameters and the second operating parameters (without seeking the user's agreement for heating).

It should be noted that in the manual heating mode, an instruction, agreeing to a request to enable the heating function of the mobile electrical apparatus in the current driving process, is generated by the user in the driving process of the mobile electrical apparatus. In such a case, the user needs to manually generate the instruction before or during every driving process of the mobile electrical apparatus.

In addition, in the automatic heating mode, an instruction, agreeing to a request to enable the heating function of the mobile electrical apparatus in a preset time limit (including the current driving process and several subsequent driving processes), is generated by the user.

In an embodiment, the battery heating condition met by the mobile electrical apparatus in the manual heating mode is different from that met by the mobile electrical apparatus in the automatic heating mode. For example, in the automatic heating mode, the mobile electrical apparatus may enable the battery heating function when detecting that the battery is at a temperature of lower than or equal to 10 °C (and is in a fault-free state). In the manual heating mode, even if the user gives a manual heating instruction when the battery is at a temperature of 15 °C (and is in a fault-free state), the mobile electrical apparatus may still enable the battery heating function.

Further, in both the manual heating mode and the automatic heating mode, it is determined that the mobile electrical apparatus meets the battery heating condition based on the first operating parameters and the second operating parameters. But the battery heating conditions corresponding to the two modes may be the same or different.

Optionally, in another embodiment based on the aforementioned method in the present application, when the driving heating mode is the semi-automatic heating mode, before the battery heating function is enabled based on the driving heating mode, the following steps are included: a request instruction is sent to enable the battery heating function; and the battery heating function is enabled if a reply instruction allowing the heating function to be enabled is received.

Further, in the semi-automatic heating mode, after determining that the mobile electrical apparatus meets a battery heating condition based on the first operating parameters and the second operating parameters, first a request instruction for requesting to enable a battery heating function needs to be sent to the user using the mobile electrical apparatus, and only after receiving a reply instruction generated by the user to allow enablement of the heating function may the corresponding battery heating function be enabled.

The form of the reply instruction is not specifically limited in the present application, for example, the reply instruction may be voice generated. The reply instruction may also be implemented by controlling an internal touch module of the mobile electrical apparatus.

By applying the technical solutions of the embodiments of the present application, the manual heating mode and the automatic heating mode that allow the electrical apparatus to directly enable the battery heating function can be provided for the user, or the semi-automatic heating mode that allows the electrical apparatus to directly enable the battery heating function only when the user allows can be provided for the user. Thus, the battery heating function is prevented from being directly enabled in a scenario where the user does not agree to enable the battery heating function, and the user's experience in using the electrical apparatus is not affected.

Optionally, in another embodiment based on the aforementioned method in the present application, when the driving heating mode is the manual heating mode, before a driving process of the mobile electrical apparatus is started, the following step is included: a request to allow the mobile electrical apparatus to enable the heating function during the current driving process is received; or when the driving heating mode is the automatic heating mode, before a driving process of the mobile electrical apparatus is started, the following step is included: a request to allow the mobile electrical apparatus to enable the heating function during a driving process within a preset time limit is received.

Specifically, in the manual heating mode/automatic heating mode, the corresponding battery heating function may be directly enabled after determining that the mobile electrical apparatus meets a battery heating condition based on the first operating parameters and the second operating parameters (without sending a request to the user to ask whether to enable the heating function).

In the manual heating mode, an instruction, agreeing to a request to enable the heating function of the mobile electrical apparatus in the current driving process, is generated by the user. In such a case, the user needs to manually generate the instruction before every driving process of the mobile electrical apparatus.

In addition, in the automatic heating mode, an instruction, agreeing to a request to enable the heating function of the mobile electrical apparatus in a preset time limit (including the current driving process and several subsequent driving processes), is generated by the user.

It should be noted that the preset time limit is not limited in the present application, for example, the preset time limit may be 3 days, 1 month, or the like.

By applying the technical solutions of the embodiments of the present application, the manual heating mode and the automatic heating mode that allow the electrical apparatus to directly enable the battery heating function can be provided for the user, or the semi-automatic heating mode that allows the electrical apparatus to directly enable the battery heating function only when the user allows can be provided for the user. Thus, the battery heating function is prevented from being directly enabled in a scenario where the user does not agree to enable the battery heating function, and the user's experience in using the electrical apparatus is not affected.

Optionally, in another embodiment based on the aforementioned method in the present application, when the driving heating mode is the manual heating mode, before a driving process of the mobile electrical apparatus is started, the following step is included: a request to allow enablement of the heating is received. By applying the technical solutions of the embodiments of the present application, the electrical apparatus can enable the battery heating function only when the user allows, when detecting that the user selects the semi-automatic heating mode. An enabling request is sent to the user when determining that the operating parameters of the battery and the motor meet a heating condition currently. Thus, the battery heating function is prevented from being directly enabled in a scenario where the user does not agree to enable the battery heating function, and the user's experience in using the electrical apparatus is not affected.

Optionally, in another embodiment based on the aforementioned method in the present application, the acquiring first operating parameters of the battery and second operating parameters of a motor of the electrical apparatus includes: first operating parameters of the battery are acquired, the first operating parameters including the corresponding cell temperature value, battery current value, battery voltage value, and remaining capacity value of the battery; and second operating parameters of the motor are acquired, the second operating parameters including the corresponding motor current value and motor voltage value. By applying the technical solutions of the embodiments of the present application, the corresponding battery heating function can be enabled only when it is ensured that the battery is not in an overheated state and the remaining capacity is sufficient, and it is ensured by detecting the current and voltage values of the motor that the motor is fault-free. Thus, the potential safety hazard caused by rashly enabling the heating function before the battery and the motor reach a preset static state is avoided.

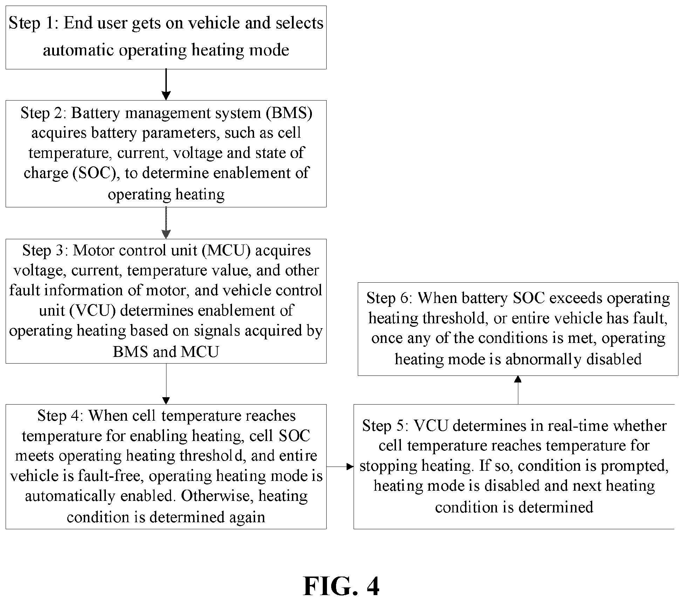

As shown in FIG. 4, in the embodiments of the present application, taking a mobile electrical apparatus being a vehicle as an example, a process of the automatic heating mode is explained:
Step 1: An end user gets on the vehicle and selects the automatic operating heating mode.
Step 2: A BMS acquires battery parameters, such as cell temperature, current, voltage and state of charge (SOC), to determine enablement of operating heating.
Step 3: An MCU acquires information such as voltage, current and faults of a motor, and a VCU determines enablement of operating heating based on signals acquired by the BMS and the MCU.
Step 4: When the cell temperature reaches a temperature for enabling heating, the cell SOC meets an operating heating threshold, and the entire vehicle is fault-free, the operating heating mode is automatically enabled. Otherwise, the heating condition is determined again.
Step 5: The VCU determines in real-time whether the cell temperature reaches a temperature for stopping heating. If so, the condition is prompted, the heating mode is disabled and the next heating condition is determined.
Step 6: When the battery SOC exceeds an operating heating threshold, or the entire vehicle has a fault, the operating heating mode is abnormally disabled.

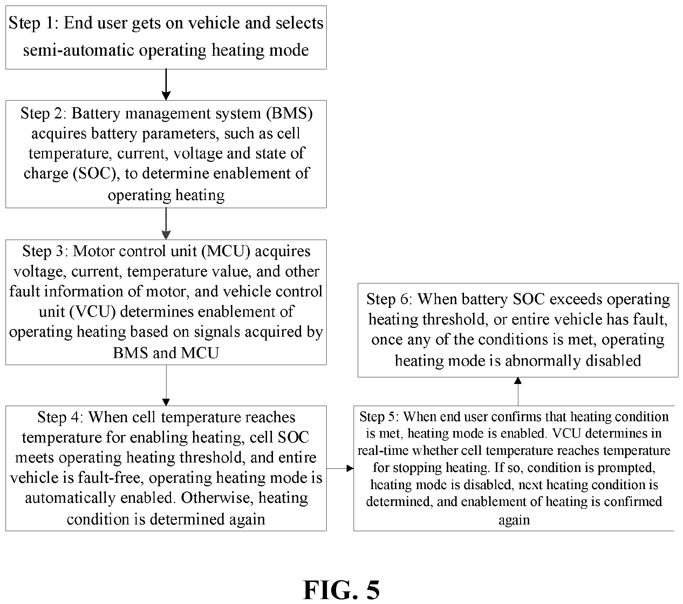

As shown in FIG. 5, in the embodiments of the present application, taking a mobile electrical apparatus being a vehicle as an example, a process of the semi-automatic heating mode is explained:
Step 1: An end user gets on the vehicle and selects the semi-automatic operating heating mode.
Step 2: A BMS acquires battery parameters, such as cell temperature, current, voltage and SOC, to determine enablement of operating heating.
Step 3: An MCU acquires information such as voltage, current and faults of a motor, and a VCU determines enablement of operating heating based on signals acquired by the BMS and the MCU.
Step 4: When the cell temperature reaches a temperature for enabling heating, the cell SOC meets an operating heating threshold, and the entire vehicle is fault-free, the VCU sends an operating heating instruction to the end user for determination. Otherwise, the heating condition is determined again.
Step 5: When the end user confirms that the heating condition is met, the heating mode is enabled. The VCU determines in real-time whether the cell temperature reaches a temperature for stopping heating. If so, the condition is prompted, the heating mode is disabled, the next heating condition is determined, and enablement of heating is confirmed again.
Step 6: When the battery SOC exceeds an operating heating threshold, or the entire vehicle has a fault, the operating heating mode is abnormally disabled.

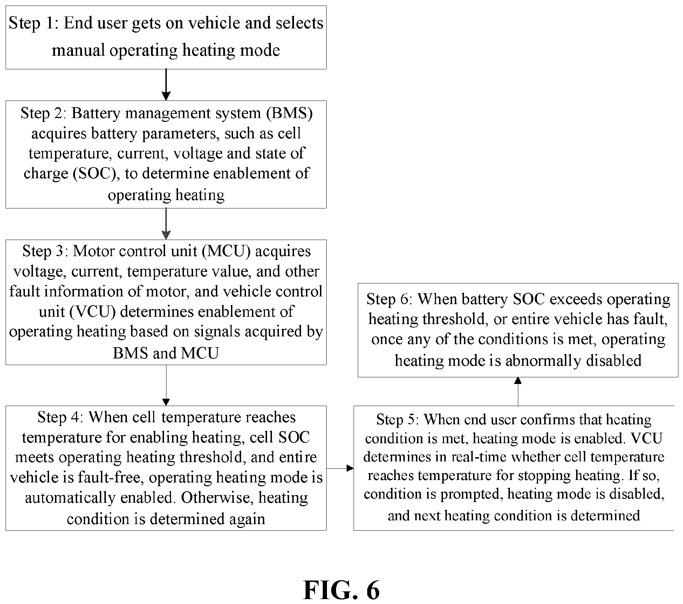

As shown in FIG. 6, in the embodiments of the present application, taking a mobile electrical apparatus being a vehicle as an example, a process of the manual heating mode is explained:
Step 1: An end user gets on the vehicle and selects the manual operating heating mode.
Step 2: A BMS acquires battery parameters, such as cell temperature, current, voltage and state of charge (SOC), to determine enablement of operating heating.
Step 3: An MCU acquires information such as voltage, current and faults of a motor, and a VCU determines enablement of operating heating based on signals acquired by the BMS and the MCU.
Step 4: When the cell temperature reaches a temperature for enabling heating, the cell SOC meets an operating heating threshold, and the entire vehicle is fault-free, the operating heating mode is automatically enabled. Otherwise, the heating condition is determined again.
Step 5: The VCU determines in real-time whether the cell temperature reaches a temperature for stopping heating. If so, the condition is prompted, the heating mode is disabled and the heating condition is determined again.
Step 6: When the battery SOC exceeds an operating heating threshold, or the entire vehicle has a fault, the operating heating mode is abnormally disabled.

Optionally, in another embodiment based on the aforementioned method in the present application, the determining that the mobile electrical apparatus meets a battery heating condition based on the first operating parameters and the second operating parameters includes: it is determined that the operating indices of the battery meet a heating function enabling condition and that the battery is in a fault-free state based on the first operating parameters; it is determined that the motor is in a fault-free state based on the second operating parameters; and it is determined that the mobile electrical apparatus meets the battery heating condition.

Further, in the process of determining that the mobile electrical apparatus meets a battery heating condition based on the first operating parameters and the second operating parameters, the determination may be performed by determining whether the operating indices and fault state of the battery meet a heating enabling condition based on the acquired first operating parameters of the battery.

By applying the technical solutions of the embodiments of the present application, the corresponding battery heating function can be enabled only when it is ensured that the battery is not in an overheated state and the remaining capacity is sufficient, and it is ensured by detecting the current and voltage values of the battery that the battery is fault-free. Thus, the potential safety hazard caused by rashly enabling the heating function before the battery reaches a preset static state is avoided.

Optionally, in another embodiment based on the aforementioned method in the present application, the determining that the operating indices of the battery meet a heating function enabling condition and that the battery is in a fault-free state based on the first operating parameters includes: it is determined that the cell temperature value of the battery is lower than a first preset temperature value, and the remaining capacity value of the battery is greater than a first preset capacity threshold based on the cell temperature value and the remaining capacity value included in the first operating parameters; it is determined that the operating indices of the battery meet the heating function enabling condition; it is determined that the battery current value is within a first preset current threshold range, and the battery voltage value is within a first preset voltage threshold range based on the battery current value and the battery voltage value included in the first operating parameters; and it is determined that the battery is in a fault-free state.

Further, in the process of determining that the mobile electrical apparatus meets a battery heating condition based on the first operating parameters, the determination may be performed by determining whether the operating indices and fault state of the battery meet a heating enabling condition based on the acquired first operating parameters of the battery.

Specifically, to prevent the battery life from being affected due to enablement of the battery heating function in case of overheating of the battery, in the embodiments of the present application, the enablement of the battery heating function may be implemented by determining whether the cell temperature value and remaining capacity of the battery reach the mark.

The first preset temperature value is not specifically limited in the present application, for example, the first present temperature value may be 30 °C, or 20 °C, or the like. **In** addition, the first preset capacity threshold is also not specifically limited in the present application, for example, the first preset capacity threshold may be 30%, or 20%, or the like.

By applying the technical solutions of the embodiments of the present application, the corresponding battery heating function can be enabled only when it is ensured that the battery is not in an overheated state and the remaining capacity is sufficient, and it is ensured by detecting the current and voltage values of the battery that the battery is fault-free. Thus, the potential safety hazard caused by rashly enabling the heating function before the battery reaches a preset static state is avoided.

Optionally, in another embodiment based on the aforementioned method in the present application, the determining that the motor is in a fault-free state based on the second operating parameters includes: it is determined that the motor current value is within a second preset current threshold range, and the motor voltage value is within a second preset voltage threshold range based on the motor current value and the motor voltage value included in the second operating parameters; it is determined that the motor temperature value is within a preset temperature range; and it is determined that the motor is in a fault-free state.

Further, in the process of determining that the mobile electrical apparatus meets a battery heating condition based on the second operating parameters, the determination may be performed by determining whether the fault state of the motor meets a heating enabling condition (i.e., the motor is in a fault-free state) based on the acquired second operating parameters of the motor.

Specifically, to prevent ineffective heating due to enablement of the battery heating function in a case that the motor has a fault, in the embodiments of the present application, the enablement of the battery heating function may be implemented by determining whether the temperature value, the current value and the voltage value of the motor reach the mark.

The second preset current threshold range is not specifically limited in the present application, for example the second preset current threshold range may be 50A, or 20A, or the like. In addition, the second preset voltage threshold range is not specifically limited in the present application, for example, the second preset voltage threshold range may be 50V, or 20V, or the like.

By applying the technical solutions of the embodiments of the present application, whether the motor is in a fault-free state may be determined by detecting whether the current and voltage values of the motor are within the normal threshold ranges. The corresponding battery heating function is enabled only when confirming that the motor is fault-free. Thus, the potential safety hazard caused by rashly enabling the heating function before the motor reaches a preset static state is avoided.

Optionally, in another embodiment based on the aforementioned method in the present application, after the battery heating function is enabled, the following steps are further included: it is determined whether the battery meets a heating function disabling condition based on the first operating parameters and the second operating parameters; and if the battery meets the heating function disabling condition, the battery heating function is disabled.

Further, in the present application, after enabling the battery heating function, whether the battery meets a heating function disabling condition is monitored in real-time or periodically. If the condition is met, the battery heating function needs to be disabled.

In an embodiment, when the battery reaches a heating function disabling condition, the operating heating mode may be automatically disabled, and the disabling condition is determined. In a case of abnormal disabling, the heating condition is no longer determined, otherwise, the heating condition is determined again.

By applying the technical solutions of the embodiments of the present application, after enabling the corresponding battery heating function, the battery heating function may be automatically disabled after detecting that a preset condition is met based on the operating parameters of the battery and the voltage. Thus, the battery life is prevented from being affected by overheating of the battery.

Optionally, in another embodiment based on the aforementioned method in the present application, the determining whether the battery meets a heating function disabling condition based on the first operating parameters and the second operating parameters includes: it is determined that the battery meets the heating function disabling condition if it is detected that the cell temperature value of the battery is greater than or equal to a second preset temperature value. By applying the technical solutions of the embodiments of the present application, after enabling the corresponding battery heating function, the battery heating function may be automatically disabled when detecting that the cell temperature value of the battery is over-high. Thus, the battery life is prevented from being affected by overheating of the battery.

Further, in the present application, after enabling the battery heating function, whether the battery meets a heating function disabling condition is monitored in real-time or periodically. If the condition is met, the battery heating function needs to be disabled.

In an embodiment, for the heating function disabling condition, if the cell temperature value of the battery is monitored to be higher than or equal to the second preset temperature value, it may be considered that a normal heating function disabling condition is met. Then, the operating heating mode may be automatically disabled, and the operating parameters of the battery and the motor are acquired again. Thus, after detecting that the operating parameters of the battery and the motor meet the battery heating condition, the corresponding battery heating function can be enabled again.

By applying the technical solutions of the embodiments of the present application, after the battery heating function is automatically disabled when detecting that the cell temperature value of the battery is over-high, the operating parameters of the battery and the motor can be acquired again, and the corresponding battery heating function can be enabled again when detecting that the operating parameters of the battery and the motor meet the battery heating condition. Thus, it is ensured that the battery can be heated again after cooling to a certain temperature. Further, the conditions of ineffective heating increased by a user manually controlling a battery self-healing function, and the resulting high energy consumption in related technologies are avoided.

Optionally, in another embodiment based on the aforementioned method in the present application, the determining whether the battery meets a heating function disabling condition based on the first operating parameters and the second operating parameters includes: if it is detected that the remaining capacity value of the battery is less than or equal to a second preset capacity threshold, and/or the mobile electrical apparatus corresponds to a fault state, it is determined that the battery meets an abnormal disabling condition for the heating function.

**In** an embodiment, for the heating function disabling condition, if it is monitored that the remaining capacity value of the battery is over-low or the mobile electrical apparatus is in a faulty state (the motor has a fault, or the battery has a fault, or other components have faults), it may be considered that the abnormal disabling condition for the heating function is met. Then, the operating heating mode may be automatically disabled, and the operating parameters of the battery and the motor are no longer acquired.

By applying the technical solutions of the embodiments of the present application, after detecting that the battery heating function is disabled due to a low remaining capacity value of the battery or a fault of the mobile electrical apparatus, it can be determined that the battery meets the abnormal disabling condition for the heating function. Then, an instruction to stop acquiring the operating parameters of the battery and the motor is generated. Thus, the computing resource of the electrical apparatus is prevented from being further consumed caused by the mobile electrical apparatus continuing to acquire the operating parameters.

Optionally, in another embodiment based on the aforementioned method in the present application, after the determining that the battery meets the abnormal disabling condition for the heating function, the following step is further included: a control instruction to stop acquiring the first operating parameters and the second operating parameters is generated.

By applying the technical solutions of the embodiments of the present application, after detecting that the battery heating function is disabled due to a low remaining capacity value of the battery or a fault of the mobile electrical apparatus, it can be determined that the battery meets the abnormal disabling condition for the heating function. Then, an instruction to stop acquiring the operating parameters of the battery and the motor is generated. Thus, the computing resource of the electrical apparatus is prevented from being further consumed due to continuous acquisition of the operating parameters.

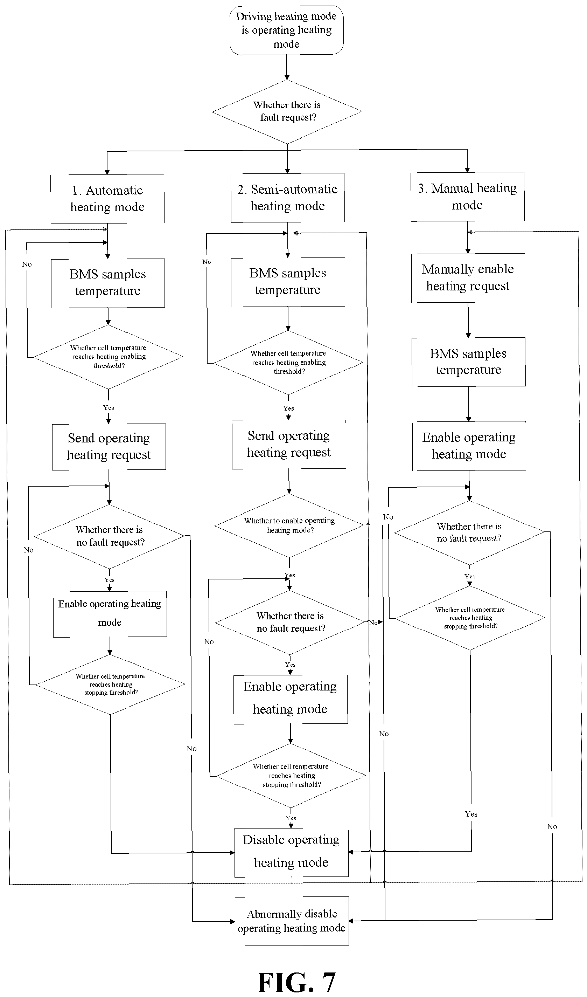

In an embodiment, still taking the mobile electrical apparatus being a vehicle as an example, FIG. 7 is an overall flowchart of a method for controlling heating of a battery provided by the present application, and the method is specifically explained below with reference to FIG. 7:
First, in the automatic heating mode, the method includes:
   Step 1: An end user gets on the vehicle and selects the automatic operating heating mode.
   Step 2: A BMS acquires battery parameters, such as cell temperature, current, voltage and SOC, an MCU acquires information such as voltage, current and faults of a motor, and a VCU determines enablement of operating heating based on signals acquired by the BMS and the MCU.
   Step 3: When the cell temperature reaches a temperature for enabling heating, the cell SOC meets an operating heating threshold, and the entire vehicle is fault-free, the operating heating mode is automatically enabled. Otherwise, the heating condition is determined again.
   Step 4: The VCU determines in real-time whether the cell temperature reaches a temperature for stopping heating. If so, the condition is prompted, the heating mode is disabled and the next heating condition is determined. When the battery SOC exceeds an operating heating threshold, or the entire vehicle has a fault, the operating heating mode is abnormally disabled.
Further, in the semi-automatic heating mode, the method includes:
   Step 1: An end user gets on the vehicle and selects the semi-automatic operating heating mode.
   Step 2: A BMS acquires battery parameters, such as cell temperature, current, voltage and SOC, an MCU acquires information such as voltage, current and faults of a motor, and a VCU determines enablement of operating heating based on signals acquired by the BMS and the MCU.
   Step 3: When the cell temperature reaches a temperature for enabling heating, the cell SOC meets an operating heating threshold, and the entire vehicle is fault-free, the VCU sends an operating heating instruction to the end user for determination. Otherwise, the heating condition is determined again.
   Step 4: When the end user confirms that the heating condition is met, the heating mode is enabled. The VCU determines in real-time whether the cell temperature reaches a temperature for stopping heating. If so, the condition is prompted, the heating mode is disabled, the next heating condition is determined, and enablement of heating is confirmed again. When the battery SOC exceeds an operating heating threshold, or the entire vehicle has a fault, the operating heating mode is abnormally disabled.
Finally, in the manual heating mode, the method includes:
   Step 1: An end user gets on the vehicle and selects the manual operating heating mode.
   Step 2: The user manually enables the operating heating mode. A BMS acquires battery parameters, such as cell temperature, current, voltage and SOC, an MCU acquires information such as voltage, current and faults of a motor, a VCU determines whether the battery temperature reaches the upper limit of a heating threshold, and the operating heating mode is enabled when the entire vehicle is fault-free.
   Step 3: The VCU determines in real-time whether the cell temperature reaches a temperature for stopping heating. If so, the condition is prompted, the heating mode is disabled, and the VCU waits for the end user to send the next operating heating instruction. When the battery SOC exceeds an operating heating threshold, or the entire vehicle has a fault, the operating heating mode is abnormally disabled.

By applying the technical solutions of the embodiments of the present application, before detecting a mobile electrical apparatus is driving, a driving heating mode selected by a user can be firstly received, and the driving heating mode corresponds to that enablement of a heating function is allowed or enablement of a heating function is to be allowed. Thus, the battery heating function is comprehensively controlled to be enabled or disabled according to the operating parameters of the battery and the motor based on the current driving heating mode. Further, a heating mode that best matches the electrical apparatus may be selected based on the user's usage habit and the current driving environment of the electrical apparatus for heating the battery. Further, the conditions of ineffective heating increased by a user manually controlling a battery self-healing function, and the resulting high energy consumption in related technologies are avoided.

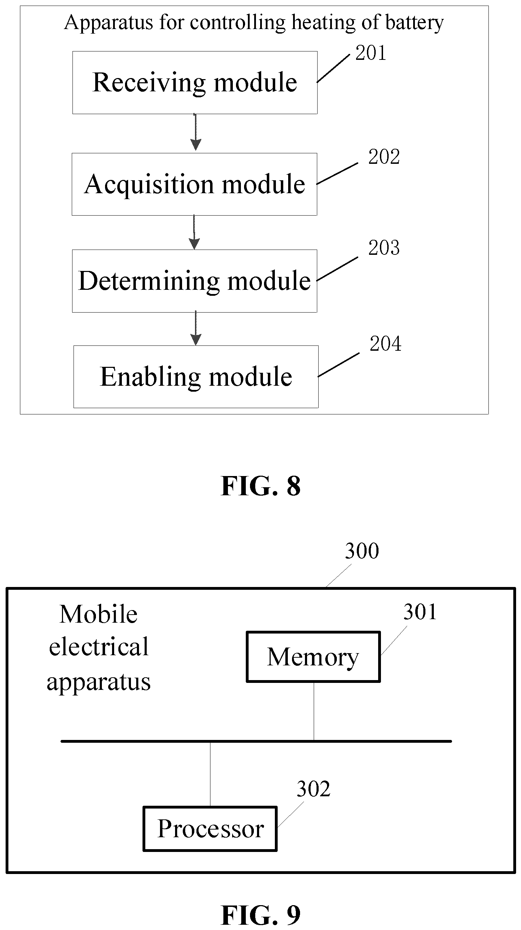

Optionally, in another embodiment of the present application, as shown in FIG. 8, the present application further provides an apparatus for controlling heating of a battery. The apparatus includes:
a receiving module 201, configured to determine a driving heating mode;
an acquisition module 202, configured to acquire first operating parameters of the battery and second operating parameters of a motor in a charging and discharging circuit of the battery during a driving process of a mobile electrical apparatus;
a determining module 203, configured to determine that the mobile electrical apparatus meets a battery heating condition based on the first operating parameters and the second operating parameters; and
an enabling module 204, configured to enable the battery heating function based on the driving heating mode.

**In** an aspect of the embodiments of the present application, a driving heating mode may be determined; first operating parameters of the battery and second operating parameters of a motor in a charging and discharging circuit of the battery are acquired during a driving process of a mobile electrical apparatus; it is determined that the mobile electrical apparatus meets a battery heating condition based on the first operating parameters and the second operating parameters; and the corresponding battery heating function is enabled based on the driving heating mode. By applying the technical solutions of the embodiments of the present application, before detecting a mobile electrical apparatus is driving, a driving heating mode selected by a user can be firstly received, and the driving heating mode corresponds to that enablement of a heating function is allowed or enablement of a heating function is to be allowed. Thus, the battery heating function is comprehensively controlled to be enabled or disabled according to the operating parameters of the battery and the motor based on the current driving heating mode. Further, a heating mode that best matches the electrical apparatus may be selected based on the user's usage habit and the current driving environment of the electrical apparatus for heating the battery. Further, the conditions of ineffective heating increased by a user manually controlling a battery self-healing function, and the resulting high energy consumption in related technologies are avoided.

**In** another embodiment of the present application, the receiving module 201 is configured to:
send a request instruction for requesting to enable the battery heating function; and enable the battery heating function if a reply instruction allowing the heating function to be enabled is received.

**In** another embodiment of the present application, the receiving module 201 is configured to: receive a request to allow enablement of the heating function.

**In** another embodiment of the present application, the acquisition module 202 is configured to:
acquire first operating parameters of the battery, the first operating parameters including the corresponding cell temperature value, battery current value, battery voltage value, and remaining capacity value of the battery; and
acquire second operating parameters of the motor, the second operating parameters including the corresponding motor current value and motor voltage value.

**In** another embodiment of the present application, the determining module 203 is configured to:
determine that the operating indices of the battery meet a heating function enabling condition and that the battery is in a fault-free state based on the first operating parameters; determine that the motor is in a fault-free state based on the second operating parameters; and
determine that the mobile electrical apparatus meets the battery heating condition.

In another embodiment of the present application, the determining module 203 is configured to:
determine that the cell temperature value of the battery is lower than a first preset temperature value, and the remaining capacity value of the battery is greater than a first preset capacity threshold based on the cell temperature value and the remaining capacity value included in the first operating parameters;
determine that the operating indices of the battery meet the heating function enabling condition;
   and
determine that the battery current value is within a first preset current threshold range, and the battery voltage value is within a first preset voltage threshold range based on the battery current value and the battery voltage value included in the first operating parameters;
determine that the battery is in a fault-free state.

In another embodiment of the present application, the determining module 203 is configured to:
determine that the motor current value is within a second preset current threshold range, and the motor voltage value is within a second preset voltage threshold range based on the motor current value and the motor voltage value included in the second operating parameters; determine that the motor temperature value is within a preset temperature range; and
determine that the motor is in a fault-free state.

In another embodiment of the present application, the determining module 203 is configured to:
determine whether the battery meets a heating function disabling condition based on the first operating parameters and the second operating parameters; and
if the battery meets the heating function disabling condition, disable the battery heating function.

In another embodiment of the present application, the determining module 203 is configured to:
determine that the battery meets the heating function disabling condition if it is detected that the cell temperature value of the battery is greater than or equal to a second preset temperature value.

In another embodiment of the present application, the acquisition module 202 is configured to:
generate a control instruction for continuously acquiring the first operating parameters and the second operating parameters; and
enable the battery heating function based on the driving heating mode after determining that the mobile electrical apparatus meets a battery heating condition based on the first operating parameters and the second operating parameters.

In another embodiment of the present application, the determining module 203 is configured to:
if it is detected that the remaining capacity value of the battery is less than or equal to a second preset capacity threshold, and/or the mobile electrical apparatus corresponds to a fault state,
determine that the battery meets an abnormal disabling condition for the heating function.

In another embodiment of the present application, the acquisition module 202 is configured to:
generate a control instruction to stop acquiring the first operating parameters and the second operating parameters.

FIG. 9 is a logical structure block diagram of a mobile electrical apparatus illustrated according to an exemplary embodiment. For example, a battery 300 may be a mobile electrical apparatus containing a battery.

In an exemplary embodiment, a non-transitory computer-readable storage medium having instructions is further provided, for example, a memory having instructions, the instructions, when executed by a processor of the battery, implementing the aforementioned method for controlling heating of a battery. The method includes: a driving heating mode is determined; first operating parameters of the battery and second operating parameters of a motor in a charging and discharging circuit of the battery are acquired during a driving process of a mobile electrical apparatus; it is determined that the mobile electrical apparatus meets a battery heating condition based on the first operating parameters and the second operating parameters; and the corresponding battery heating function is enabled based on the driving heating mode. Optionally, the instructions may also be executed by the processor of the battery to implement other steps involved in the above exemplary embodiments. For example, the non-transitory computer-readable storage medium may be a read-only memory (ROM), a random access memory (RAM), a compact disc-ROM (CD-ROM), a magnetic tape, a floppy disk, an optical data storage device, or the like.

In an exemplary embodiment, an application program/computer program product is further provided, including one or more instructions. The one or more instructions may be executed by a processor of the battery, to implement the aforementioned method for controlling heating of a battery. The method includes: a driving heating mode is determined; first operating parameters of the battery and second operating parameters of a motor in a charging and discharging circuit of the battery are acquired during a driving process of a mobile electrical apparatus; it is determined that the mobile electrical apparatus meets a battery heating condition based on the first operating parameters and the second operating parameters; and the corresponding battery heating function is enabled based on the driving heating mode. Optionally, the instructions may also be executed by the processor of the battery to implement other steps involved in the above exemplary embodiments.

FIG. 9 is an example diagram of the battery 300. Those skilled in the art may understand that FIG. 9 shows only an example of the battery 300 and does not constitute a limitation on the battery 300. The battery 300 may include more or fewer components than those shown in the figure, or combine certain components, or include different components. For example, the battery 300 may also include an input/output device, a network access device, a bus, and the like.

The processor 302 may be a central processing unit (CPU), other general-purpose processor, a digital signal processor (DSP), an application specific integrated circuit (ASIC), a field-programmable gate array (FPGA) or other programmable logic device, a discrete gate or transistor logic device, a discrete hardware component, or the like. The general-purpose processor may be a microprocessor, or the processor 302 may be any conventional processor, or the like. The processor 302 is a control center of the battery 300 and connects the respective parts of the entire battery 300 via various interfaces and circuits.

The 301 is configured to store computer-readable instructions 303. The processor 302 implements various functions of the battery 300 by running or executing the computer-readable instructions or modules stored in the memory 301, and calling data stored in the memory 301. The memory 301 may mainly include a program storing area and a data storing area. The program storing area may store an operating system, an application program required by at least one function (e.g., a sound playback function, and an image playback function), and the like. The data storing area may store data created based on use of the battery 300, and the like. In addition, the memory 301 may be a hard disk, an internal memory, a plug-in hard disk, a smart media card (SMC), a secure digital (SD) card, a flash card, at least one disk storage device, a flash device, an ROM, an RAM, or other non-volatile/volatile storage device.

If implemented in the form of a software functional module and sold or used as an independent product, a module integrated with the battery 300 may also be stored in a computer-readable storage medium. Based on such understanding, to implement all or part of the processes in the methods of the aforementioned embodiments, the present invention may also instruct the relevant hardware through computer-readable instructions. The computer-readable instructions are stored in a computer-readable storage medium, and the computer-readable instructions may implement the steps of the aforementioned method embodiments when executed by a processor.

Those skilled in the art may easily come up with other embodiments of the present application after considering the specification and practicing the invention disclosed herein. The present application aims to cover any variations, uses, or adaptive changes of the present application, which follow the general principles of the present application and include common knowledge or customary technical means in the present technical field, not disclosed in the present application. The specification and embodiments are only considered exemplary, and the true scope and spirit of the present application are indicated by the following claims.

It should be understood that the present application is not limited to the precise structure described above and shown in the drawings, and various modifications and changes can be made without departing from the scope of the present application. The scope of the present application is limited only by the attached claims.

## Claims

1. A method for controlling heating of a battery, comprising:
determining a driving heating mode;
acquiring first operating parameters of the battery and second operating parameters of a motor in a charging and discharging circuit of the battery during a driving process of a mobile electrical apparatus;
determining that the mobile electrical apparatus meets a battery heating condition based on the first operating parameters and the second operating parameters; and
enabling the corresponding battery heating function based on the driving heating mode.

2. The method according to claim 1, wherein the driving heating mode comprises an automatic heating mode, a semi-automatic heating mode and a manual heating mode.

3. The method according to claim 2, wherein when the driving heating mode is the semi-automatic heating mode, before enabling the battery heating function based on the driving heating mode, the method comprises:
sending a request instruction for requesting to enable the battery heating function; and enabling the battery heating function if a reply instruction allowing the heating function to be enabled is received.

4. The method according to claim 2, wherein when the driving heating mode is the manual heating mode, before a driving process of the mobile electrical apparatus is started, the method comprises: receiving a request to allow the mobile electrical apparatus to enable the heating function during the current driving process; or,
when the driving heating mode is the automatic heating mode, before a driving process of the mobile electrical apparatus is started, the method comprises: receiving a request to allow the mobile electrical apparatus to enable the heating function during a driving process within a preset time limit.

5. The method according to any one of claims 1 to 4, wherein the acquiring first operating parameters of the battery and second operating parameters of a motor of the electrical apparatus comprises:
acquiring first operating parameters of the battery, the first operating parameters comprising the corresponding cell temperature value, battery current value, battery voltage value, and remaining capacity value of the battery; and
acquiring second operating parameters of the motor, the second operating parameters comprising the corresponding motor temperature value, motor current value and motor voltage value of the motor.

6. The method according to claim 1 or 4, wherein the determining that the mobile electrical apparatus meets a battery heating condition based on the first operating parameters and the second operating parameters comprises:
determining that the operating indices of the battery meet a heating function enabling condition and that the battery is in a fault-free state based on the first operating parameters; determining that the motor is in a fault-free state based on the second operating parameters; and
determining that the mobile electrical apparatus meets the battery heating condition.

7. The method according to claim 6, wherein the determining that the operating indices of the battery meet a heating function enabling condition and that the battery is in a fault-free state based on the first operating parameters comprises:
determining that the cell temperature value of the battery is lower than a first preset temperature value, and the remaining capacity value of the battery is greater than a first preset capacity threshold based on the cell temperature value and the remaining capacity value comprised in the first operating parameters;
determining that the operating indices of the battery meet the heating function enabling condition;
and
determining that the battery current value is within a first preset current threshold range, and the battery voltage value is within a first preset voltage threshold range based on the battery current value and the battery voltage value comprised in the first operating parameters;
determining that the battery is in a fault-free state.

8. The method according to claim 6 or 7, wherein the determining that the motor is in a fault-free state based on the second operating parameters comprises:
determining that the motor current value of the motor is within a second preset current threshold range, and the motor voltage value of the motor is within a second preset voltage threshold range based on the motor current value and the motor voltage value comprised in the second operating parameters; determining that the motor temperature value is within a preset temperature range; determining that the motor temperature value is within a preset temperature range; and
determining that the motor is in a fault-free state.

9. The method according to any one of claims 1 to 8, wherein after the enabling the battery heating function, the method further comprises:
determining whether the battery meets a heating function disabling condition based on the first operating parameters and the second operating parameters; and
if the battery meets the heating function disabling condition, disabling the battery heating function.

10. The method according to claim 9, wherein the determining whether the battery meets a heating function disabling condition based on the first operating parameters and the second operating parameters comprises:
determining that the battery meets the heating function disabling condition if it is detected that the cell temperature value of the battery is greater than or equal to a second preset temperature value.

11. The method according to claim 9 or 10, wherein after the disabling the battery heating function, the method further comprises:
generating a control instruction for continuously acquiring the first operating parameters and the second operating parameters; and
enabling the battery heating function based on the driving heating mode after determining that the mobile electrical apparatus meets a battery heating condition and based on the first operating parameters and the second operating parameters.

12. The method according to claim 9, or 10, or 11, wherein the determining whether the battery meets a heating function disabling condition based on the first operating parameters and the second operating parameters comprises:
if it is detected that the remaining capacity value of the battery is less than or equal to a second preset capacity threshold, and/or the mobile electrical apparatus corresponds to a fault state;
determining that the battery meets an abnormal disabling condition for the heating function.

13. The method according to claim 11, wherein after the determining that the battery meets the abnormal disabling condition for the heating function, the method further comprises:
generating a control instruction to stop acquiring the first operating parameters and the second operating parameters.

14. An apparatus for controlling heating of a battery, comprising:
a receiving module, configured to determine a driving heating mode;
an acquiring module, configured to acquire first operating parameters of the battery and second operating parameters of a motor in a charging and discharging circuit of the battery during a driving process of a mobile electrical apparatus;
a determining module, configured to determine that the mobile electrical apparatus meets a battery heating condition based on the first operating parameters and the second operating parameters; and
an enabling module, configured to enable the corresponding battery heating function based on the driving heating mode.

15. A mobile electrical apparatus, comprising:
a memory, configured to store executable instructions; and
a processor, configured to execute the executable instructions stored in the memory to implement the operations of the method for controlling heating of a battery according to any one of claims 1 to 13.

16. A computer-readable storage medium, having computer-readable instructions stored therein, wherein the instructions, when executed, implement the operations of the method for controlling heating of a battery according to any one of claims 1 to 13.
